# EUROPEAN PATENT APPLICATION

(11) **EP 2 101 152 A2**
(43) Date of publication of application: **16.09.2009**
(21) Application number: 09154910.5
(22) Date of filing: 11.03.2009
(51) Int. Cl.: G01C 21/36

(54) **Destination setting support device and destination setting support program**

(30) Priority: 12.03.2008 JP 2008063264
(71) Applicant: Aisin AW Co., Ltd., Fujii-cho Anjo-shi, Aichi 444-1192 (JP)
(72) Inventor: Kawauchi, Hiroshi, Okazaki-shi Aichi 444-8564 (JP)
(74) Representative: TBK-Patent

(57) **Abstract**

A navigation device arranges in order destination candidates that are found and divides them into groups of two hundred destination candidates each. The navigation device caches in a cache memory the group to which the destination candidates that are currently displayed in search results display spaces belong, as well as the adjacent groups in the upward direction and the downward direction. On a candidate display screen, a Previous Group button and a Next Group button are displayed that respectively display the first destination candidate and the last destination candidate in the group that is currently displayed in list form. If a user touches one of these buttons, the navigation device switches the list display on the candidate display screen to the adjacent group in one of the upward direction and the downward direction, respectively. The navigation device can thus switch the list display one cached group at a time.

## Description

The present invention relates to a destination setting support device and a destination setting support program, such as a destination setting support device and a destination setting support program that set a destination in a navigation device.

In recent years, guidance of vehicles by navigation devices has become increasingly common.
A navigation device has a function that searches for a route from a departure point to a destination, a function that detects the vehicle's position using the Global Positioning System (GPS) satellites and a sensor such as a gyroscope or the like, a function that displays the vehicle's current position and the route to the destination on map, and the like.
Generally, a destination is input in cases where a navigation device searches for a route, searches for facilities in the vicinity of the current position and confirms information, and the like. In the destination input procedure, destination candidates that correspond to the characters that are input are found within a destination data file, and the destination candidates are displayed. The input is completed when one of the displayed destination candidates is selected.

A search for a destination sometimes results in hits for a large number of destination candidates, and in those cases, the question of how to present the destination candidates that a user wants by performing only a small number of operations is an important issue.
One example of a technology to deal with this sort of issue is a navigation device that is described in Japanese Patent Application Publication No. JP-A-2007-65861.
The technology provides index buttons for a search results list, arranged in order by phonetic representation. The user then selects one of the index buttons in order to display the destination candidates that begin with the phonetic representation that corresponds to that index button.

However, in some cases, for example, a large number of destination candidates exist that begin with the same phonetic representation, so in those cases, a large number of destination candidates exist that correspond to a single index button.
These sorts of cases present a problem, because in many cases, the desired destination is in the middle of the list, which means that a large number of operations are required in order to reach the entry for the desired destination.

Accordingly, it is an object of the present invention to display the desired destination efficiently in a case where a large number of destination candidates are displayed in a list.
This object is solved by a destination setting support device as set out in claim 1, alternatively by a destination setting support program as set out in claim 6, and further alternatively by a destination setting support method as set out in claim 7.
Advantageous developments are defined in the dependent claims.

According to a first aspect of the invention, dividing the destination candidates that are found into the groups that each contain more destination candidates than the specified number that can be displayed makes it possible to switch the displayed list one group at a time. It is therefore possible to display the desired destination candidate and set the destination more efficiently.
According to a second aspect of the invention, displaying the range of the group makes it possible to let the user know what the current group and the adjacent groups are.
According to a third aspect of the invention, displaying both ends of the range makes it possible to select either one of the ends, and also makes it possible to switch the display to the group that is adjacent to the selected end.
According to a fourth aspect of the invention, it is possible to switch the display to the destination candidate in the middle of the group.
According to a fifth aspect of the invention, making the groups the units for caching makes it possible to bring the switching of the display into conformity with a hardware configuration.
According to a sixth aspect of the invention, dividing the destination candidates that are found into the groups that each contain more destination candidates than the specified number that can be displayed makes it possible for a function for switching the displayed list one group at a time to be implemented in a computer.

In the following, the drawings are briefly described.
FIG. 1 is a system configuration diagram of a navigation device;
FIG. 2 is a figure for explaining a destination data file;
FIG. 3 is a figure for explaining groups of destination candidates;
FIG. 4 is a figure for explaining a method of grouping and caching the destination candidates;
FIG. 5 is a figure for explaining a candidate display screen;
FIG. 6 is a figure for explaining control in a case where a list display is switched one destination candidate at a time;
FIG. 7 is a figure for explaining control in a case where the list display is switched one page at a time;
FIG. 8 is a figure for explaining control in a case where the switching of the list display is performed such that a boundary between the groups is straddled;
FIG. 9 is a figure for explaining control in a case where the list display is switched one group at a time;
FIG. 10 is a figure for explaining a modified example of the candidate display screen; and
FIG. 11 is a flowchart for explaining a procedure of list display processing of the destination candidates.

### (1) Overview of embodiment

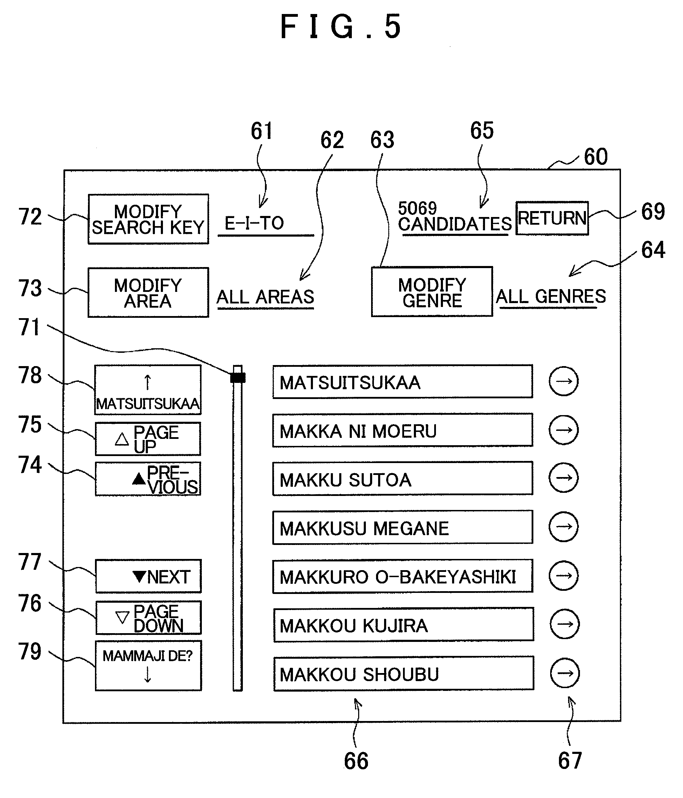

A navigation device 1 arranges found destination candidates in descending order and divides them into groups of two hundred candidates each. The navigation device 1 then caches in a cache memory a group to which the destination candidates that are displayed in list form in search results display spaces 66 (FIG. 5) belong, as well as adjacent groups in the upward direction and the downward direction.
On a candidate display screen 60, a Previous Group button 78 and a Next Group button 79 are displayed that respectively display the first destination candidate and the last destination candidate in the currently displayed group. If a user touches one of these buttons, the navigation device 1 switches the list display on the candidate display screen 60 to the adjacent group in one of the upward direction and the downward direction, respectively.
Thus, because the navigation device 1 switches the list display in units of cached groups, it can perform the switching of the list display at high speed and can also perform efficient control of the caches by coordinating the switching of the list display.

### (2) Details of the embodiment

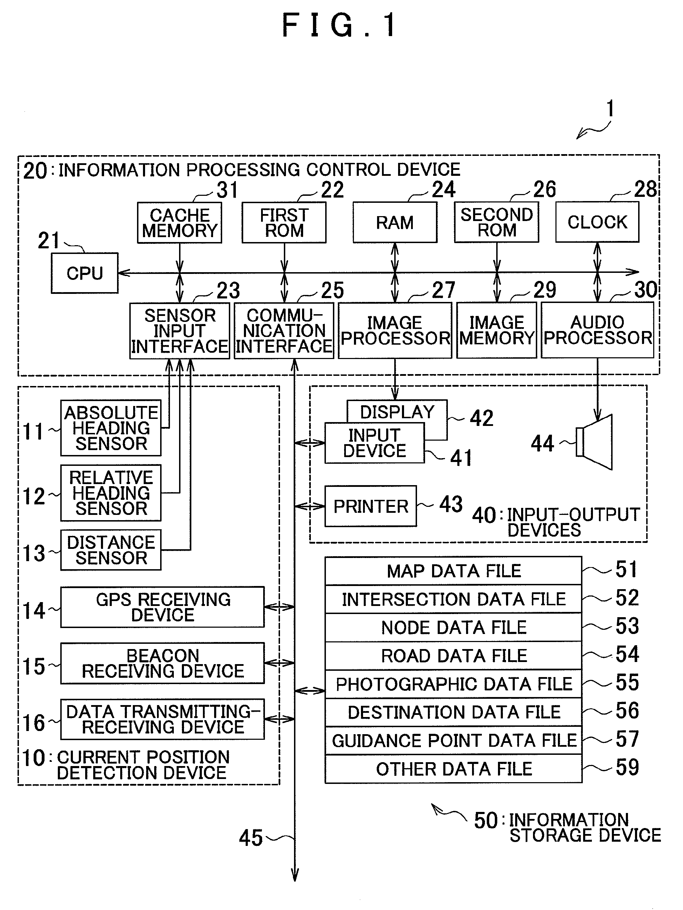

FIG. 1 is a system configuration diagram of the navigation device 1 according to the present embodiment.
The navigation device 1 is installed in a vehicle and, as shown in FIG. 1, includes a current position detection device 10, an information processing control device 20, input-output devices 40, and an information storage device 50.
A configuration of the current position detection device 10, which functions as a current position acquisition unit, will be explained first. An absolute heading sensor 11 is a geomagnetic sensor that detects the direction in which the vehicle is facing, by using a magnet to detect the direction north, for example. The absolute heading sensor 11 may be any unit that detects an absolute heading.

A relative heading sensor 12 is a sensor that detects, for example, whether or not the vehicle has turned at an intersection. It may be an optical rotation sensor that is attached to a rotating portion of the steering wheel, a rotating type of resistance volume, or an angle sensor that is attached to a wheel portion of the vehicle.
A gyroscopic sensor that utilizes angular velocity to detect a change in an angle may also be used. In other words, the relative heading sensor 12 may be any unit that can detect an angle that changes in relation to a reference angle (the absolute heading).
A distance sensor 13 may be, for example, a unit that detects and measures a rotation of a wheel or a unit that detects an acceleration and derives its second integral. In other words, the distance sensor 13 may be any unit that can measure a distance that the vehicle moves.

A GPS receiving device 14 is a device that receives a signal from a man- made satellite. It can acquire various types of information, such as a signal transmission time, information on the position of the receiving device 14, a movement velocity of the receiving device 14, a direction of movement of the receiving device 14, and the like.
A beacon receiving device 15 is a device that receives a signal that is transmitted from a transmission device that is installed at a specific location. Specifically, the beacon receiving device 15 can obtain information that pertains to the vehicle's operation, such as VICS information, information on traffic congestion, information on the vehicle's current position, parking information, and the like.

A data transmitting-receiving device 16 is a device that utilizes a telephone circuit or radio waves to perform communication and exchange information with other devices outside the vehicle.
For example, the data transmitting-receiving device 16 may be used in a variety of ways, such as for a car telephone, ATIS, VICS, GPS route correction, inter-vehicle communication, and the like, and is capable of inputting and outputting information that relates to the operation of the vehicle.

The information processing control device 20 performs calculations and control based on information that is input from the current position detection device 10 and the input-output devices 40, as well as on information that is stored in the information storage device 50. The information processing control device 20 is also a unit that performs control such that calculation results are output to an output unit such as a display 42, a printer 43, a speaker 44, or the like.

The configuration of the information processing control device 20 is described below.
A central processing unit (CPU) 21 performs overall calculations and control for the entire navigation device 1.
A cache memory 31 is a memory that caches the groups of the destination candidates that have been found and grouped. The CPU 21 can access the cache memory 31 at higher speed than RAM 24.
Control of the cache memory 31 will be explained in detail later.

A first ROM 22 stores programs that are related to navigation, specifically navigation programs that are related to a destination input process that uses a group display of chain stores according to the present embodiment, to current position detection, to route searching, to displayed guidance, and the like.
A sensor input interface 23 is a unit that receives an input from the current position detection device 10.

The RAM 24 stores information that the user inputs, such as an input from an input device 41 that is described later, as well as destination information, information on a point that the vehicle passes, and the like. The RAM 24 is also a storage unit for storing the results of calculations that the CPU 21 makes based on the information that is input by the user, route search results, and map information that is read in from the information storage device 50.
Furthermore, in the destination input process according to the present embodiment, the destination names, the representative names for the chain stores, and the like are stored as the destination candidates in the RAM 24.
A communication interface 25 is a unit that inputs and outputs information from the current position detection device 10, particularly information that is acquired from outside the vehicle.

A second ROM 26 stores programs that are related to navigation, specifically a navigation program that is related to voice guidance.
An image processor 27 is a processing unit that takes vector information that is processed by the CPU 21 and processes it into image information.
A clock 28 keeps time.
An image memory 29 is a unit that stores the image information that the image processor 27 processes.
An audio processor 30 processes audio information that is read in from the information storage device 50 and outputs it to the speaker 44.

The input-output devices 40 include the input device 41, the display 42, the printer 43, and the speaker 44. The user uses the input device 41 to input data such as a destination, a point that the vehicle passes, a search condition, and the like. The display 42 displays an image. The printer 43 prints information. The speaker 44 outputs the audio information. The input device 41 may be a touch panel that is provided on the face of the display 42, a touch switch, a joystick, a key switch, or the like.
A map of the area around the current position, various types of operation screens, and a driving route to the destination are displayed on the display 42.
Also displayed on the display 42 are operation screens, such as a character input screen for inputting the search characters that are used in the destination input process according to the present embodiment, the candidate display screen 60 that displays a list of search candidates (the destination candidates), and the like. Touching a position that corresponds to an item or the like that is displayed on an operation screen causes the item in the touched position to be input from the touch panel that is provided on the screen of the display 42.

The information storage device 50 is connected to the information processing control device 20 through a transmission route 45.
The information storage device 50 stores a map data file 51, an intersection data file 52, a node data file 53, a road data file 54, a photographic data file 55, a destination data file 56, a guidance point data file 57, and an other data file 59.
The information storage device 50 is generally configured from an optical storage medium such as a DVD-ROM or a CD-ROM, or from a magnetic storage medium such as a hard disk or the like, but it may also be configured from any one of various types of storage media, such as a magneto optical disk, a semiconductor memory, or the like.

The map data file 51 stores map data such as a national road map, road maps of various regions, residential maps, and the like. The road maps include various types of roads, such as main arterial roads, expressways, secondary roads, and the like, as well as terrestrial landmarks (facilities and the like). The residential maps include graphics that show the shapes of terrestrial structures and the like, as well as street maps that indicate street names and the like. The secondary roads are comparatively narrow roads with rights of way that are narrower than the prescribed values for national routes and prefectural routes. They include roads for which traffic restriction information is not added, such as "one-way" and the like.

The intersection data file 52 stores data that is related to intersections, such as geographical coordinates for the locations of intersections, intersection names, and the like. The node data file 53 stores geographical coordinate data and the like for each node that is used for route searching on the map. The road data file 54 stores data that is related to roads, such as the locations of roads, the types of roads, the number of lanes, the connection relationships between individual roads, and the like. The photographic data file 55 stores image data of photographs taken of locations that require visual display, such as various types of facilities, tourist areas, major intersections, and the like. The guidance point data file 57 stores guidance data on geographical points where guidance is required, such as the content of a guidance display sign that is installed on a road, guidance for a branching point, and the like.

The destination data file 56 stores the destination data for use in the destination searches, such as data on major tourist areas, buildings, facilities, locations such as companies, sales offices, and the like that are listed in telephone directories and that can be selected as destinations, and the like.
The destination data includes search keys (phonetic representations of names) and information on facilities. The information on the facilities includes names, coordinates, telephone numbers, additional information, and the like. The coordinates are x and y coordinates that are derived from the latitudes and longitudes of the destinations. The additional information is detailed data that is related to the destinations.

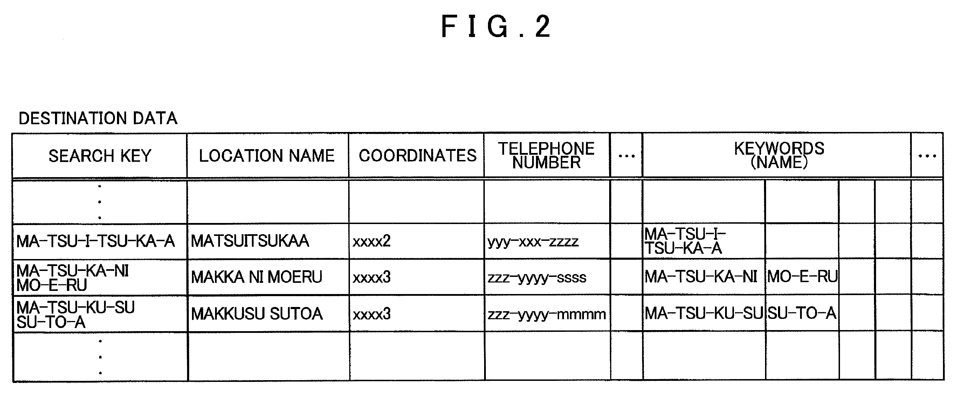

FIG. 2 is a figure that shows an example of a logical structure of the destination data file 56.
The destination data file 56 specifies each of the destination candidates in terms of a search key, a location name, coordinates, a telephone number, keywords, and the like.

The location name is a character string that describes the destination candidate and is used in displaying the search results on the candidate display screen 60, which is described later.
The search key is the phonetic representation of the location name.
There are two methods for setting a search term in the navigation device 1. The first method is character input, where the user sets the search term by inputting characters directly. The second method is keyword input, where the user sets the search term by selecting a keyword that has been prepared in advance. In a case where the search term is input as characters, the search is conducted for a character string that corresponds to the search key.

Note that in the present embodiment, the search operates such that it finds names that start with a character string that matches the search key. However, the search may also operate such that, for example, the search term "ma-tsu-ka-ni mo-e-ru" is divided into the segments "ma-tsu-ka-ni" and "mo-e-ru", which are then stored in memory. Any name that matches one of the segments, such as "mo-e-ru", for example, is treated as a match for the search term "ma-tsu-ka-ni mo-e-ru".

The coordinates are coordinate values for the location, such as the latitude and the longitude or the like. The telephone number is the telephone number of the facility at the location.
The navigation device 1 can calculate the distance from the vehicle to the destination candidate based on the coordinates of the current position and the coordinates in the destination data.

The keywords are keywords that are set for the location name. The keywords are set for the three attributes of name, address, and genre. Note that in FIG. 2, the keywords for the name are shown, but the keywords that pertain to the address and the genre have been omitted.
The user can search for destinations by genre by selecting a genre and the associated keywords.

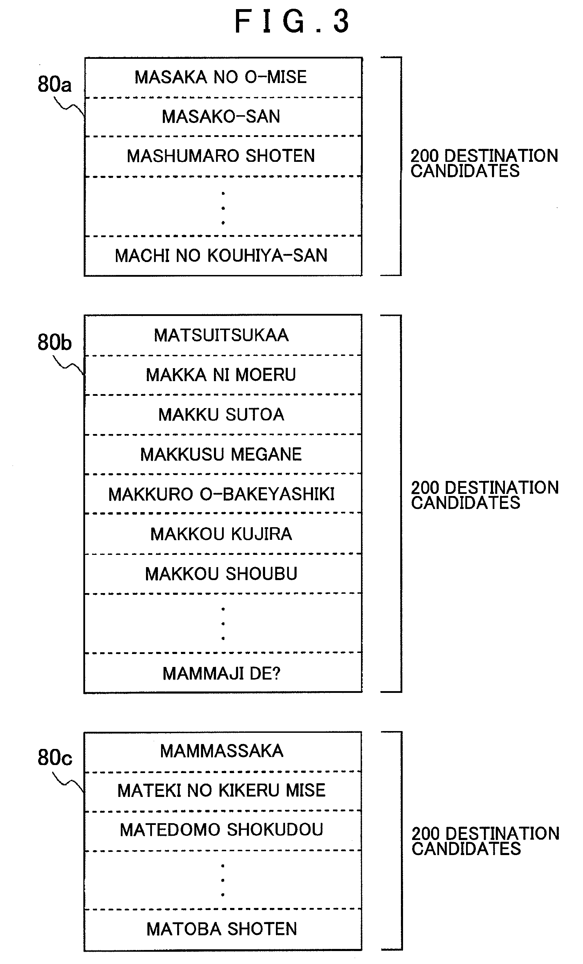

FIG. 3 is a figure for explaining groups that are set for the destination candidates.
In the process of displaying the destination candidates in list form, the navigation device 1 caches the destination candidates in the cache memory 31 in units of groups.
Caching a portion of the found destination candidates in the cache memory 31 in this manner makes it possible for the navigation device 1 to perform high-speed displaying of the destination candidates.

In FIG. 3, each of the destination candidates is represented by its location name.
The found destination candidates are divided into groups of two hundred destination candidates each, arranged in descending order of their phonetic representations according to the Japanese syllabary, for example.
In the example in FIG. 3, a group 80a contains two hundred destination candidates from "masaka no o-mise" to "machi no kouhiya-san", a group 80b contains two hundred destination candidates from "matsuitsukaa" to "mammaji de?", and a group 80c contains two hundred destination candidates from "mammassaka" to "matoba shoten".
Note that in the present embodiment, the destination candidates are arranged in descending order by their phonetic representations, but this is just one example, and the destination candidates may also be arranged for display in another order.
Further, in the present embodiment, the destination candidates are divided into groups of two hundred destination candidates each as an example, but groups containing other numbers of candidates may also be used.

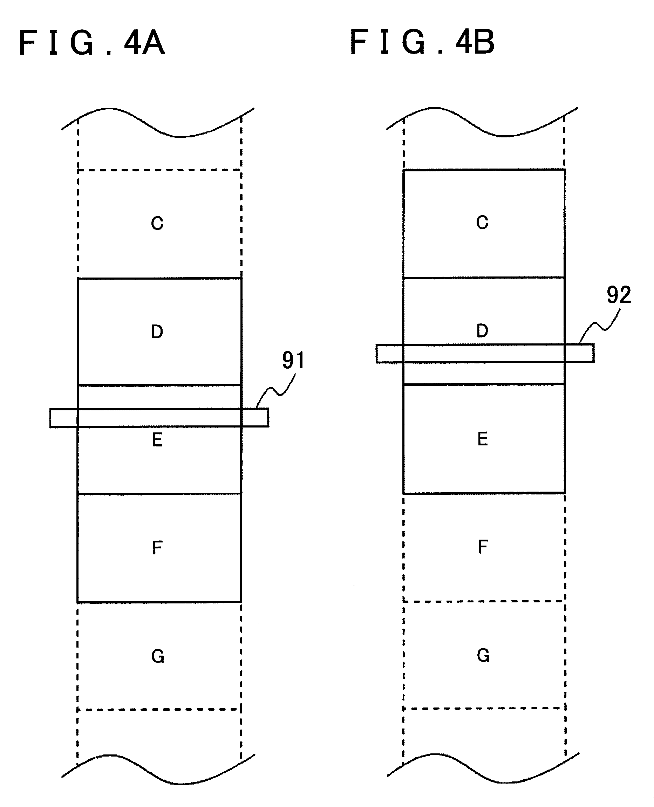

Each figure in FIG. 4 is a figure for explaining a method by which the navigation device 1 caches the groups of the destination candidates.
The navigation device 1 caches the destination candidates in units of groups such that a total of three groups are cached in the cache memory 31. The three groups are the group to which the destination candidates that are currently displayed in list form belong and the preceding and following groups, that is, the adjacent groups in the upward direction and the downward direction.

FIG. 4A schematically shows how the found destination candidates are arranged in descending order and divided into groups C, D, and the like.
In a case where the navigation device 1 displays in list form a display range 91 in a group E, the navigation device 1 caches in the cache memory 31 the group E, in which the display range 91 is contained, and the preceding and following adjacent groups D, F.
In FIG. 4A, the cached groups are indicated by solid lines, and the groups that are not cached are indicated by broken lines.

FIG. 4B shows a case in which the user has switched (moved) the range that is displayed in list form from the display range 91 to a display range 92.
In this case, the navigation device 1 caches in the cache memory 31 the group D, to which the display range 92 belongs, and the preceding and following adjacent groups C, E.
The navigation device 1 therefore deletes the group F from the cache memory 31 and newly stores the group C in the cache memory 31.

Thus, controlling caching operations in real time as the destination candidates that are displayed in list form are switched, such that the group to which the destination candidates that are currently displayed in list form belong is cached along with the preceding and following groups, makes it possible for the navigation device 1 to display the destination candidates smoothly and at high speed, even if the list display is switched between groups, and to handle the task using a small-capacity memory for the cache memory 31.

Note that in a case where the display range is in the uppermost group, the navigation device 1 may, for example, cache only that group and the adjacent group in the downward direction, because no adjacent group exists in the upward direction. Similarly, in a case where the display range is in the last group, the navigation device 1 may, for example, cache only that group and the adjacent group in the upward direction, because no adjacent group exists in the downward direction.

FIG. 5 is a figure that shows the candidate display screen 60 that is displayed on the display 42.
As shown in FIG. 5, a search key space 61, an area input space 62, a Modify Genre button 63, a genre input space 64, a total number of candidates space 65, search results display spaces 66, detail display buttons 67, a Return button 69, a scroll bar 71, a Modify Search Key button 72, a Modify Area button 73, the Previous Group button 78, a Previous button 74, a Page Up button 75, a Page Down button 76, a Next button 77, and the Next Group button 79 are displayed on the candidate display screen 60.
The Previous Group button 78 and the Next Group button 79 respectively display the location names of the first destination candidate and the last destination candidate in the currently displayed group, such that the user can be aware of the range of the group to which the destination candidates that are currently displayed in list form belong.
These buttons are provided because the number of the destination candidates that belong to the group is greater than the number that is displayed in list form, making it impossible to display the entire group in a single list.

The search key space 61 is a space that displays the search key for which the search is performed. Characters that have been input on a character input screen that is not shown in the drawings are displayed as the search key.
The Modify Search Key button 72 is a button that is touched (pressed) in order to modify the characters that are displayed in the search key space 61. When the Modify Search Key button 72 is touched, the display returns to the character input screen, and it becomes possible to modify the characters that are displayed in the search key space 61.

The area input space 62 is a space for setting a search area within which the search for the destination data will be performed. For example, the area may be set to "All areas" to define the entire country as the search area, and the area may also be set to a smaller area, such as "Osaka Prefecture", Aichi Prefecture", "Metropolitan Tokyo", or the like.
A search area setting menu is provided as a part of the destination input process, although it is not shown in the drawings. The user can therefore select the desired search area.
The navigation device 1 uses the destination data for the area that is set in the area input space 62 and narrows down the destination candidates in the area according to the search key.
The Modify Area button 73 is a button that is touched in order to modify the search area that is set in the area input space 62. When the Modify Area button 73 is touched, it becomes possible to modify the search area that is set in the area input space 62. After the search area is modified, a search of the modified area is performed using the search key that is displayed in the search key space 61.

The genre input space 64 is a space for setting a genre within which the search for the destination data will be performed. For example, the genre may be set to "all genres", "leisure", "restaurants", "hotels", or the like.
A genre setting menu is provided as a part of the destination input process, although it is not shown in the drawings. The user can therefore select the desired genre.
The navigation device 1 uses the destination data for the genre that is set in the genre input space 64 and narrows down the destination candidates in the genre according to the search key.

The Modify Genre button 63 is a button that is touched in order to modify the genre that is set in the genre input space 64. When the Modify Genre button 63 is touched, it becomes possible to modify the genre that is set in the genre input space 64. After the genre is modified, a search of the modified genre is performed using the search key that is displayed in the search key space 61.
By using the search area and the genre as described above to narrow down the destination data that is the object of the search, the navigation device 1 reduces the amount of the search processing.

The total number of candidates space 65 displays the total number of the destination candidates that have been selected.
The search results display spaces 66 are spaces for displaying in list form the names of the destination candidates that have been selected by the search.
In the search results display spaces 66, seven destination candidates that are contained in the group of the destination candidates are displayed in list form in descending order. The display range of the destination candidates that are thus displayed in list form at the same time in the search results display spaces 66 is called a page.
If one of the destination candidates that are displayed in list form in the search results display spaces 66 is selected (touched), the navigation device 1 sets the touched destination candidate as the destination for guidance.

One of the detail display buttons 67 is displayed for each of the destination candidates. When the user touches the detail display button 67 for the desired destination candidate, the navigation device 1 searches the destination data file 56 for the facilities information that is associated with the selected destination candidate and displays the facilities information on the display 42.
The Return button 69 is a button for returning to the character input screen that is the screen that is previous to the candidate display screen 60.

The Previous button 74 and the Next button 77 are buttons for respectively scrolling up and scrolling down within the search results display spaces 66, one destination candidate at a time.
The Page Up button 75 and the Page Down button 76 are buttons for respectively scrolling up and scrolling down within the search results display spaces 66, one page at a time (in this case, seven destination candidates at a time).

The Previous Group button 78 is a button for switching the list display to the group that is previous to the group to which the destination candidates that are currently displayed in list form belong (in other words, the adjacent group in the upward direction), and the Next Group button 79 is a button for switching the list display to the next group (in other words, the adjacent group in the downward direction).
The scroll bar 71 indicates the position of the currently displayed destination candidates among all of the destination candidates. Scrolling up and scrolling down can be done by touching and dragging the scroll bar 71.

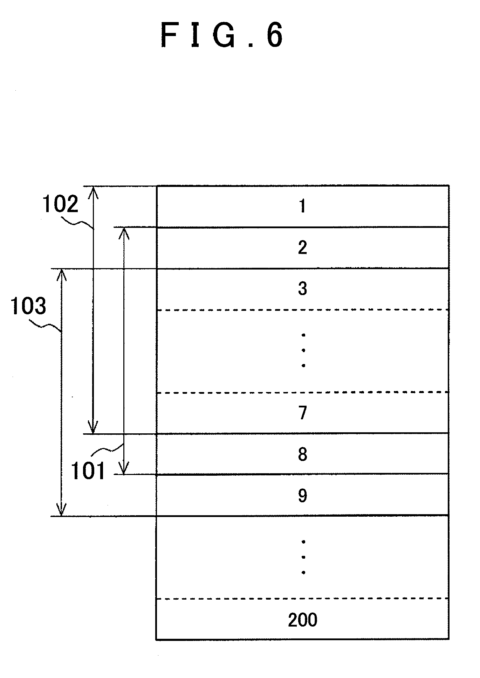

FIG. 6 is a figure for explaining control in a case where the Previous button 74 and the Next button 77 are used to switch the list display one destination candidate at a time.
FIG. 6 shows a given group schematically, with the destination candidates indicated by numbers in descending order.
A total of seven destination candidates, from the second destination candidate to the eighth destination candidate that are contained in a display range 101, are currently being displayed in list form in the search results display spaces 66.

If the Previous button 74 is touched while the destination candidates in the display range 101 are being displayed in this manner in the search results display spaces 66, the navigation device 1 switches the destination candidates that are displayed in list form in the upward direction by only one destination candidate, such that the first to the seventh destination candidates, which are contained in a display range 102, are displayed.
In contrast, if the Next button 77 is touched, the navigation device 1 switches the destination candidates that are displayed in list form in the downward direction by only one destination candidate, such that the third to the ninth destination candidates, which are contained in a display range 103, are displayed.

Thus, if one of the Previous button 74 and the Next button 77 is selected by the user, the navigation device 1 switches the destination candidates that are displayed in list form in the search results display spaces 66 in one of the upward direction and the downward direction, respectively, one destination candidate at a time.

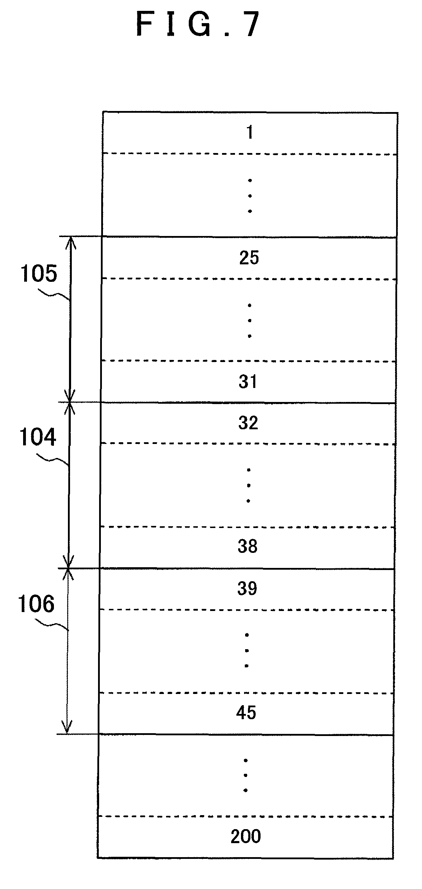

FIG. 7 is a figure for explaining control in a case where the Page Up button 75 and the Page Down button 76 are used to switch the list display one page at a time.
A total of seven destination candidates, from the thirty-second destination candidate to the thirty-eighth destination candidate that are contained in a display range 104, are currently being displayed in list form in the search results display spaces 66.
If the Page Up button 75 is touched while the destination candidates in the display range 104 are being displayed in this manner, the navigation device 1 switches the destination candidates that are displayed in list form in the upward direction by only seven destination candidates (in other words, by only one page), such that the twenty-fifth to the thirty-first destination candidates, which are contained in a display range 105, are displayed.

In contrast, if the Page Down button 76 is touched, the navigation device 1 switches the destination candidates that are displayed in list form in the downward direction by only seven destination candidates (in other words, by only one page), such that the thirty-ninth to the forty-fifth destination candidates, which are contained in a display range 106, are displayed.
Thus, if one of the Page Up button 75 and the Page Down button 76 is selected by the user, the navigation device 1 switches the destination candidates that are displayed in list form in the search results display spaces 66 in one of the upward direction and the downward direction, respectively, one page of seven destination candidates at a time.

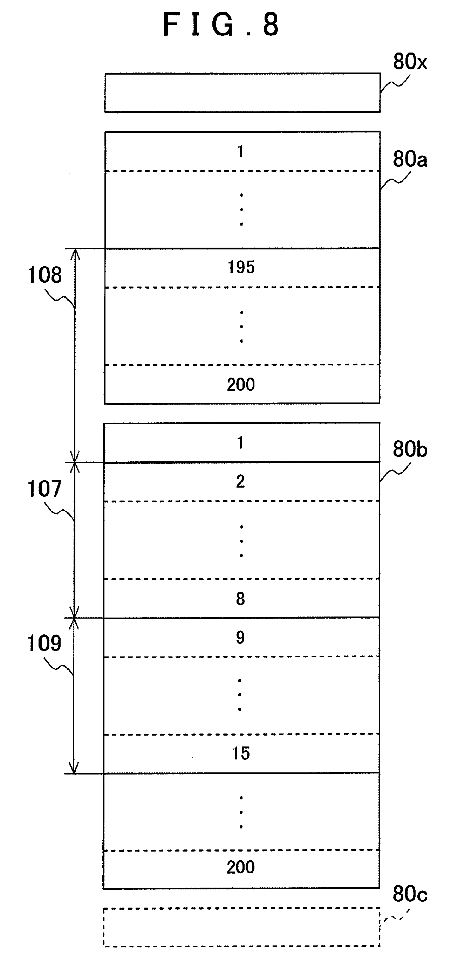

FIG. 8 is a figure for explaining control in a case where the switching of the list display is performed such that a boundary between the groups is straddled.
FIG. 8 shows a case in which the list display is switched one page at a time.
A total of seven destination candidates, from the second destination candidate to the eighth destination candidate that are contained in a display range 107 of the group 80b, are currently being displayed in list form in the search results display spaces 66. In a case where the Page Down button 76 is touched, the navigation device 1 switches the list display to a display range 109 that is adjacent in the downward direction.
The display range 107 and the display range 109 both belong to the group 80b, so the navigation device 1 does not make a change of the group it has read from the cache memory 31.

In contrast, if the Page Up button 75 is touched, the navigation device 1 switches the list display to a display range 108 that is adjacent in the upward direction.
The display range 108 extends from the one-hundred-ninety-fifth destination candidate that is contained in the group 80a to the first destination candidate that is contained in the group 80b.
In this case, the navigation device 1 deletes from the cache memory 31 the group 80c that is adjacent to the group 80b in the downward direction and caches in the cache memory 31 a group 80x that is adjacent to the group 80a in the upward direction.

Thus, in a case where the display range that is displayed in list form moves between the groups, the navigation device 1 deletes from the cache memory 31 the group that is adjacent in the direction that is opposite to the direction of movement relative to the group from which the movement begins, and caches in the cache memory 31 the group that is adjacent in the direction of movement toward the group to which the movement is made.

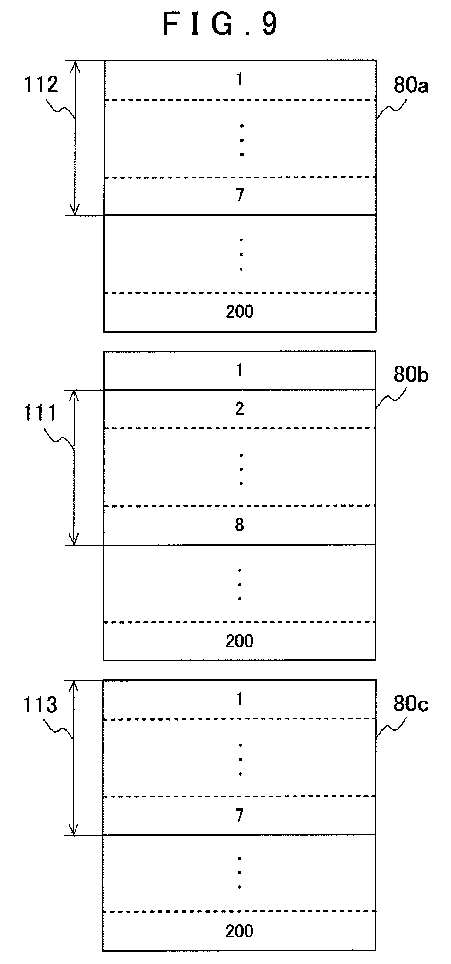

FIG. 9 is a figure for explaining control in a case where the Previous Group button 78 and the Next Group button 79 are used to switch one group at a time.
A total of seven destination candidates, from the second destination candidate to the eighth destination candidate that are contained in a display range 111 of the group 80b, are currently being displayed in list form in the search results display spaces 66.
If the Previous Group button 78 is touched while the destination candidates in the display range 111 are being displayed in this manner, the navigation device 1 sets the display range to be the first seven destination candidates (the display range 112 in FIG. 9) in the group (in this case, the group 80a) that is adjacent in the upward direction to the group to which the destination candidates that are currently displayed in list form belong.

The result is that when the user touches the Previous Group button 78, the range of the destination candidates that are displayed in list form in the search results display spaces 66 is switched from the display range 111 to the display range 112.
Furthermore, because the group that is displayed in list form is switched to the adjacent group in the upward direction when the Previous Group button 78 is touched in this manner, the navigation device 1 also deletes the group 80c from the cache memory 31 and caches in the cache memory 31 the group that is adjacent to the group 80a in the upward direction.

In contrast, if the Next Group button 79 is touched, the navigation device 1 sets the display range to be the first seven destination candidates (the display range 113 in FIG. 9) in the group (in this case, the group 80c) that is adjacent in the downward direction to the group to which the destination candidates that are currently displayed in list form belong.

The result is that when the user touches the Next Group button 79, the range of the destination candidates that are displayed in list form in the search results display spaces 66 is switched from the display range 111 to the display range 113.
Furthermore, because the group that is displayed in list form is switched to the adjacent group in the downward direction when the Next Group button 79 is touched in this manner, the navigation device 1 also deletes the group 80a from the cache memory 31 and caches in the cache memory 31 the group that is adjacent to the group 80c in the downward direction.

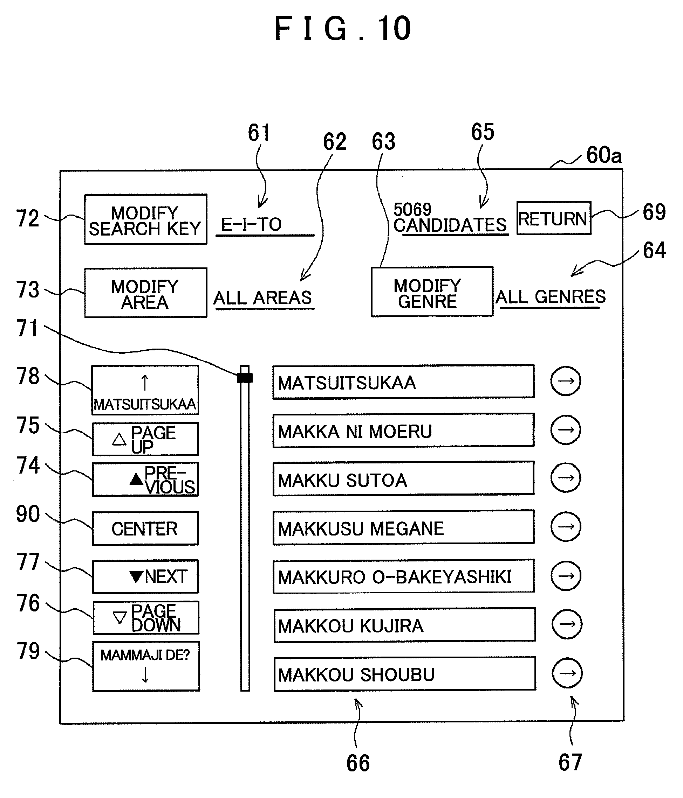

FIG. 10 is a figure for explaining a modified example of the candidate display screen 60.
A candidate display screen 60a is the candidate display screen 60 with a center button 90 added to it.
The center button 90 is a button that switches the display range to close to the middle of the group to which the destination candidates that are currently displayed in list form in the search results display spaces 66 belong.
The location name of the destination candidate that is positioned in the middle of the group is displayed in the center button 90, such that the user can know the approximate position of a desired destination candidate within the group.
In the present embodiment, for example, the center button 90 causes the display range to become the ninety-seventh to the one-hundred-third destination candidates in the group.

Furthermore, in a case where the display range that is currently displayed in list form extends over two groups, the navigation device 1 may, for example, display the center button 90 in a dimmed form and not accept any user operation of the button.
In this case, if the user operates one of the Previous button 74 and the Next button 77 to switch the display range in one of the downward direction and the upward direction, switching the list display such that the display range is entirely within one of the two groups, the center button 90 becomes operative again.

Thus the modified example, by providing switching of the list display to close to the middle of the group, in addition to the switching of the list display one destination candidate at a time, one page at a time, and one group at a time, makes it possible for the user to perform a more detailed operation in relation to the switching of the display range.

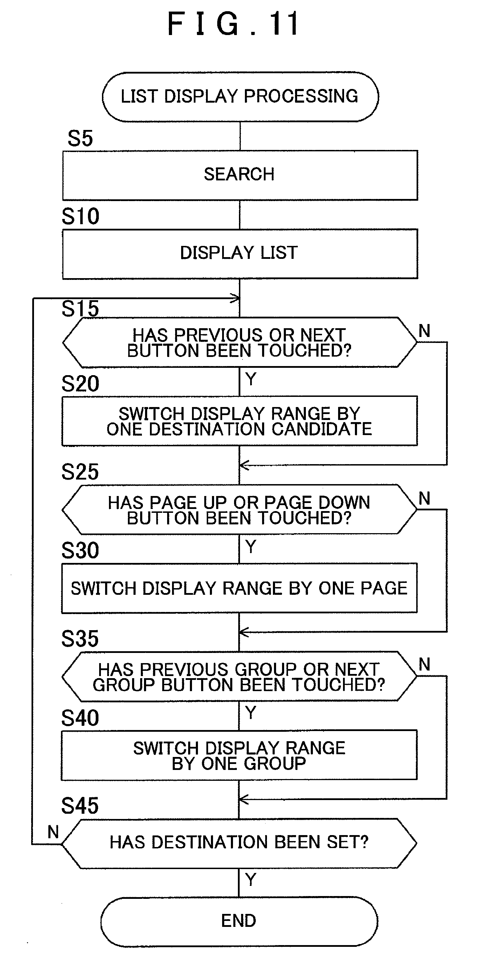

FIG. 11 is a flowchart for explaining a procedure of list display processing of the destination candidates that the navigation device 1 performs.
First, the navigation device 1 searches for the destination candidates in the destination data file 56 using the search key in the search key space 61, the area in the area input space 62, and the genre in the genre input space 64 (step 5).

The navigation device 1 is thus provided with a search term input unit that inputs a search term (a phonetic representation or the like) and with a search unit that searches for the destination candidates that correspond to the search term that has been input.
The navigation device 1 then reads the destination candidates that are found and arranges them in descending order, establishing the groups of two hundred destination candidates each that are the units in which it caches the destination candidates.
The fact that the groups are formed of two hundred destination candidates each and the number of the destination candidates that are displayed in list form in the search results display spaces 66 at one time is seven (one page) means that the navigation device 1 is provided with a grouping unit that arranges the destination candidates that are found in an order (for example, descending order) and divides them into the groups, each of which contains more destination candidates than a specified number (one page's worth in this case).

Next, the navigation device 1 sets the first seven destination candidates as the display range and caches in the cache memory 31 the group that contains the seven destination candidates, along with the preceding and following groups.
However, because the initial list display is the first seven destination candidates, and because no group exists in the upward direction from the group that contains the seven destination candidates, the navigation device 1 caches in the cache memory 31 the current group and the adjacent group in the downward direction.

Next, the navigation device 1 displays in list form in the search results display spaces 66 the destination candidates that are set in the display range (step 10).
The navigation device 1 is thus provided with a display unit that displays a specified number (seven in this case) of the destination candidates that are found.
The navigation device 1 also displays in the Previous Group button 78 the first destination candidate in the group that is currently displayed in list form and displays the last destination candidate in the group in the Next Group button 79.

The fact that the range of the group is displayed means that the navigation device 1 is provided with a range display unit that, by displaying one and the other of both ends of the range, displays the range of the group to which the destination candidates that are currently displayed in the search results display spaces 66 belong.

Next, the navigation device 1 determines whether one of the Previous button 74 and the Next button 77 has been touched (step 15).
In a case where one of the Previous button 74 and the Next button 77 has been touched (Y at step 15), the navigation device 1 switches the list display by one destination candidate in the direction that corresponds to the touched button (step 20). In a case where it is necessary at this time to switch the groups that are cached, the navigation device 1 also performs the switching.

Next, in a case where the list display has been switched by one destination candidate (step 20), as well as in a case where the Previous button 74 and the Next button 77 have not been touched (N at step 15), the navigation device 1 determines whether one of the Page Up button 75 and the Page Down button 76 has been touched (step 25).
In a case where one of the Page Up button 75 and the Page Down button 76 has been touched (Y at step 25), the navigation device 1 switches the list display by one page of seven destination candidates in the direction that corresponds to the touched button (step 30). In a case where it is necessary at this time to switch the groups that are cached, the navigation device 1 also performs the switching.

Next, in a case where the list display has been switched by one page (step 30), as well as in a case where the Page Up button 75 and the Page Down button 76 have not been touched (N at step 25), the navigation device 1 determines whether one of the Previous Group button 78 and the Next Group button 79 has been touched (step 35).
In a case where one of the Previous Group button 78 and the Next Group button 79 has been touched (Y at step 35), the navigation device 1 switches the list display by one group in the direction that corresponds to the touched button (step 40). At this time, the navigation device 1 also switches the groups that are cached.

A selection unit is thus provided that uses the touching of one of the Previous Group button 78 and the Next Group button 79 to select the one of the one end and the other end that is displayed in the touched button. A display switching unit is also provided that switches the display by one group to the destination candidates that belong to the group that is adjacent to the selected end.
Furthermore, as shown above by the modified example of the candidate display screen 60, the selection unit can also be configured such that it is capable of selecting one of the destination candidates that are positioned at the one end, the other end, and the middle, and the display switching unit can also be configured such that, in a case where the destination candidate that is positioned in the middle is selected, the display switching unit switches the display to that destination candidate.

Next, in a case where the list display has been switched by one group (step 40), as well as in a case where the Previous Group button 78 and the Next Group button 79 have not been touched (N at step 35), the navigation device 1 determines whether or not a destination has been set by the user (step 45).
In a case where the user has touched one of the destination candidates that are displayed in list form in the search results display spaces 66, the navigation device 1 sets the touched destination candidate as the destination and makes the determination at step 45 by detecting the setting.
The navigation device 1 is thus provided with a destination setting unit that sets one of the found destination candidates as the destination.

In a case where the destination has not been set (N at step 45), the navigation device 1 returns to step 15 and continues the processing that switches the display in the search results display spaces 66.
On the other hand, in a case where the destination has been set (Y at step 45), the navigation device 1 ends the list display processing.
By switching the list display one group at a time in this way, the navigation device 1 functions as a destination setting support device that acquires the destination setting.

According to the present embodiment that has been explained above, the effects listed below can be obtained.
(1) The destination candidates that are found can be divided into groups with fixed ranges, and the list display can be switched one group at a time.
(2) Dividing the destination candidates that are found into the groups that are the units for caching, and caching the group to which the destination candidates that are currently displayed in list form belong, along with the adjacent groups, makes it possible to perform the switching of the list display one group at a time at high speed.
(3) Displaying, in the Previous Group button 78 and the Next Group button 79, the first and the last destination candidates in the group that is currently displayed in list form makes it possible to present to the user the group that is currently displayed in list form.

Note that in the present embodiment, the destination candidates that are found are divided into the groups that are the units for caching, but this is just one example, and the destination candidates may also be grouped according to the Japanese syllabary, as well as according to any other user-friendly standard.

As described above, a navigation device arranges in order destination candidates that are found and divides them into groups of two hundred destination candidates each. The navigation device caches in a cache memory the group to which the destination candidates that are currently displayed in search results display spaces belong, as well as the adjacent groups in the upward direction and the downward direction. On a candidate display screen, a Previous Group button and a Next Group button are displayed that respectively display the first destination candidate and the last destination candidate in the group that is currently displayed in list form. If a user touches one of these buttons, the navigation device switches the list display on the candidate display screen to the adjacent group in one of the upward direction and the downward direction, respectively. The navigation device can thus switch the list display one cached group at a time.

## Claims

1. A destination setting support device, comprising:
a search term input unit (41) for inputting a search term;
a search unit that is adapted to search for destination candidates that correspond to the search term that is input;
a display unit (42) that is adapted to display a specified number of the destination candidates that are found;
a grouping unit that is adapted to arrange the destination candidates that are found in an order and to divide them into groups that each contain more destination candidates than the specified number;
a display switching unit that is adapted to switch, one of the groups at a time, the destination candidates that are displayed by the display unit; and
a destination setting unit that is adapted to accept a selection of one of the displayed destination candidates and sets the selected destination candidate as a destination.

2. The destination setting support device according to claim 1, further comprising:
a range display unit that is adapted to display a range (91, 92) of the group to which the displayed destination candidates belong.

3. The destination setting support device according to claim 2, further comprising:
a selection unit that is adapted to select one of the one end and another end of both ends of the range that are displayed in the range display, wherein
the display switching unit is adapted to switch the display to the destination candidates that belong to the group that is adjacent to the selected end.

4. The destination setting support device according to claim 3, wherein
the range display unit is adapted to, in addition to displaying the one end and the other end of the both ends of the range, display a destination candidate that is positioned in the middle of the range,
the selection unit is capable of selecting one of the one end that is displayed, the other end that is displayed, and the destination candidate that is positioned in the middle of the range, and
the display switching unit is adapted to, in a case where the destination candidate that is positioned in the middle of the range is selected, switches the display to that destination candidate.

5. The destination setting support device according to any one of claims 1 to 4, wherein
the groups are units in which the destination candidates that are found are cached in a storage area.

6. A destination setting support program comprising software portions that causes the computer, when the program is run on the computer, to perform the functions of:
inputting a search term;
searching for destination candidates that correspond to the search term that is input;
displaying a specified number of the destination candidates that are found;
arranging the destination candidates that are found in an order and dividing them into groups, each of which contains more destination candidates than the specified number;
switching, one of the groups at a time, the destination candidates that are displayed by the display unit; and
accepting a selection of one of the displayed destination candidates and sets the selected destination candidate as a destination.

7. A destination setting support method comprising
inputting a search term;
searching for destination candidates that correspond to the search term that is input;
displaying a specified number of the destination candidates that are found;
arranging the destination candidates that are found in an order and dividing them into groups, each of which contains more destination candidates than the specified number;
switching, one of the groups at a time, the destination candidates that are displayed by the display unit; and
accepting a selection of one of the displayed destination candidates and sets the selected destination candidate as a destination.
